# EUROPEAN PATENT SPECIFICATION

(11) **EP 4 405 583 B1**
(45) Date of publication and mention of the grant of the patent: **17.12.2025**
(21) Application number: 23742401.5
(22) Date of filing: 28.06.2023
(51) Int. Cl.: F03D 3/00, F03D 3/02, F03D 3/04

(54) **WIND TURBINE OF CYLINDRICAL SHAPE WITH FIXED OBLIQUE OUTER CHANNELS AND VERTICAL INNER BLADE FOR THE PRODUCTION OF ELECTRIC CURRENT FROM THE WIND**
ZYLINDRISCHE WINDTURBINE MIT FESTEN SCHRÄGEN AUSSENKANÄLEN UND VERTIKALEM INNENFLÜGEL ZUR ERZEUGUNG VON ELEKTRISCHEM STROM AUS DEM WIND
ÉOLIENNE EN FORME CYLINDRIQUE À CANAUX EXTERNES OBLIQUES FIXES ET PALE INTERNE VERTICALE DESTINÉE À LA PRODUCTION DE COURANT ÉLECTRIQUE À PARTIR DU VENT

(30) Priority: 27.07.2022 GR 20220100607
(43) Date of publication of application: 31.07.2024
(73) Proprietor: Dervenis, Grigorios, 41222 Larisa (GR); Dervenis, Konstantinos, 41222 Larisa (GR)
(72) Inventor: Dervenis, Grigorios, 41222 Larisa (GR); Dervenis, Konstantinos, 41222 Larisa (GR)
(74) Representative: Yazitzoglou, Evagelia S.
(86) International application number: PCT/GR2023/000028
(87) International publication number: WO 2024/023538

(56) References cited:
- WO-A1-2011/150484
- US-A- 4 486 143

## Description

It is a cylindrical wind turbine, with an internal vertical axis (5) drawing I, and adapted blades (3) drawing III above it in full height per floor, producing electric current from the wind in large dimensions with quite a fairly large frontal surface and fairly large yields. DRAWING I shows the top view of the wind turbine with the fixed channels (1), the supports (12) on the outer periphery (18), the inner periphery (17) with the blade (3) on a vertical axis (5) and the air flow (2). DRAWING II shows the vertical section of the wind turbine with the central vertical axis (5) and the blade (3), the floors (8) and the foundation as well as the generator (9) and the tapered bearing (6). The third DRAWING III shows a detail of the central axis (5) on one floor with the blades (3) and mounting grid (4)

### DISADVANTAGES OF EXISTING WIND TURBINES

i. Constructions with a specific height and diameter of the blade, small frontal surface and at high wind speeds unstable and inefficient due to idle rotation
ii. Blade rotation speed proportional to the wind speed. Starting speed Ven.>7m/sec while after 100km/h idle rotation under the fear of blade breakage
iii. High-tech construction, difficult to maintain and with a finite operating time
iv. Sensitive constructions in the rotation of the blade
v. Small returns with high cost and slow payback

An example of a known wind turbine is disclosed in WO 2011/150484 A1.

### DESCRIPTION:

According to the invention, a multi floor wind turbine according to claim 1 is provided. The present wind turbine has a cylindrical shape, drawing I, which is also the top view of the wind turbine consisting of two concentric circles: the outer (18) and the inner (17). Between the two peripheries are the oblique channels - walls (1), straight or curved, made of reinforced concrete of thickness and length according to the size of the wind turbine and supports (12) on the outer periphery that function like a funnel according to the BERNOULLI's principle, i.e. the air enters through a large orifice (13)-(14) and exits through a small orifice (15)-(16) resulting in the increase of the airspeed. The construction will take place in floors (8) drawing II. At the ends of the channels-walls (1) DRAWING I, and at the points of contact with the inner circle (17) an electric curtain will be constructed that will rise and fall at the ends of the channels, depending on whether we want the wind turbine to work or not. The foundation will be done in depth depending on the static study.

At the base of the foundation, a large, tapered bearing (6) drawing II, will be placed in the centre of the concentric circles, with automatic greasing, where the vertical axis (5) will rotate with the blade (3), drawing III. Above and perpendicular to the axis will be fixed a large gear (7) drawing II, with a belt that will transmit the rotational movement of the axis to a generator (9) drawing II, while above and parallel to this disc will be fixed a second disc, larger and heavier peripherally (10) drawing II, which will be used for braking the axis and as a flywheel. It can also be fitted with an automatic gearbox, as in automatic cars, where, depending on the torque force of the axis, the rotation is transmitted to a corresponding generator.

The axis (5) of the blade (3) drawing II, is vertical, rests above the bearing (6) and extends up to the top floor. On each floor it shall be supported by hollow sections with bearings fixed to the slab of each floor horizontally with a corresponding bearing. On each floor and on the axis, drawing III, the blades (3) shall be fixed with a network of hollow sections (4). The blade (3) drawing III has a semi-circular or other semi-elliptical shape, depending on the study, is parallel to the axis and is fixed over the network (4) drawing III. The inner circle (17) drawing III on each floor slab, where the blade (3) drawing III rotates, shall be empty, so that the rotating air masses of the blade can swirl and rise from one floor to another as an artificial tornado, except for the roof of the basement which shall be a fully reinforced slab to protect the mechanical equipment from rain, snowfall, etc. The ending (11) drawing II, on the top floor will also be open to allow the air masses to escape. In the event of snowfall and ice formation on the walls of the channels-walls (1) drawing I, ceilings and floors, they will be lined with galvanised sheet metal at a distance of 10 cm from the surfaces, so that an electrical resistor can be installed internally for heating and defrosting. The electrical energy will be supplied for consumption and there will be batteries to store part of the energy for the needs of the wind turbine.

### ADVANTAGES OF THE WIND TURBINE

i. Stable construction made of reinforced concrete and due to its symmetry and earthquake resistance, resistant to time and any wind speed and with a large frontal surface.
ii. Wind speed increase n-times of wind speed (input (13)-(14) and output (15)-(16)) according to BERNOULLI's principle
iii. Exploitation of low speeds due to the increase in speed and exploitation of high speeds
iv. Creation of an artificial tornado inside the wind turbine due to the rotation of the air masses
v. Simple construction without high technology with simple maintenance and durability
vi. Operation with any wind direction

Furthermore, I could say that there are no disadvantages to this construction and that with a few hundred of these wind turbines, part of a country's energy problem can be solved. Wind energy is abundant, a gift of nature, soft, inexhaustible and clean. There will be growth in agriculture with the construction of greenhouses, seawater desalination plants for drinking water for the islands and wherever else needed, residential heating-cooling and a host of other applications.

### NOTE (numbering for description, summary, claims, drawings)

① REINFORCED CONCRETE CHANNELS - WALLS
② WIND DIRECTION
③ SEMI-CIRCULAR - CURVED BLADE
④ BLADE SUSPENSION NETWORK
⑤ VERTICAL ROTATION AXIS
⑥ TAPERED BEARING
⑦ TOOTHED GEAR OR TRANSMISSION BELT OF THE MOVEMENT TO THE GENERATOR
⑧ WIND TURBINE FLOORS
⑨ GENERATOR
⑩ BRAKE DISC - FLYWHEEL
⑪ ENDING OF FLOORS
⑫ SUPPORTS IN THE PERIPHERY
⑬-⑭ AIR INTAKE BETWEEN TWO LARGE CHANNELS - WALLS
⑮-⑯ AIR OUTLET BEFORE IMPACT WITH THE BLADE
⑰ INNER CIRCLE PERIPHERY
⑱ OUTER CIRCLE PERIPHERY

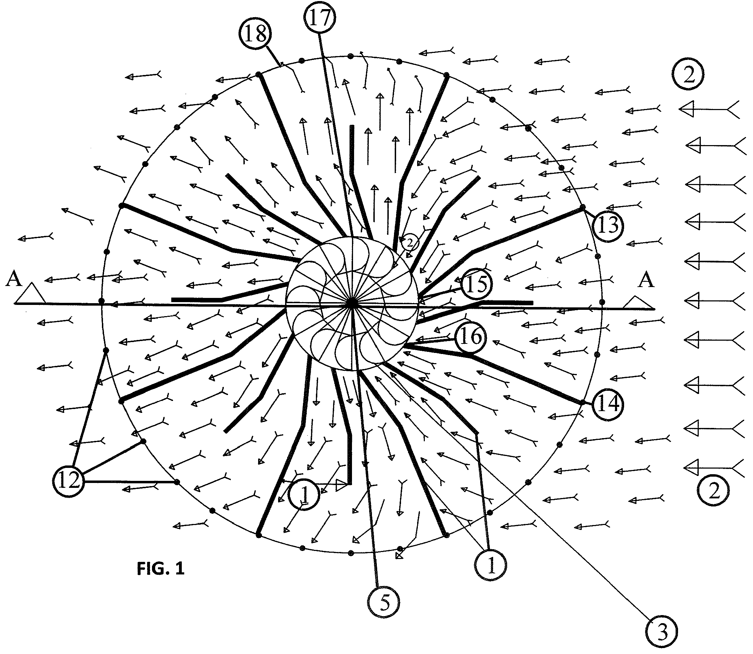

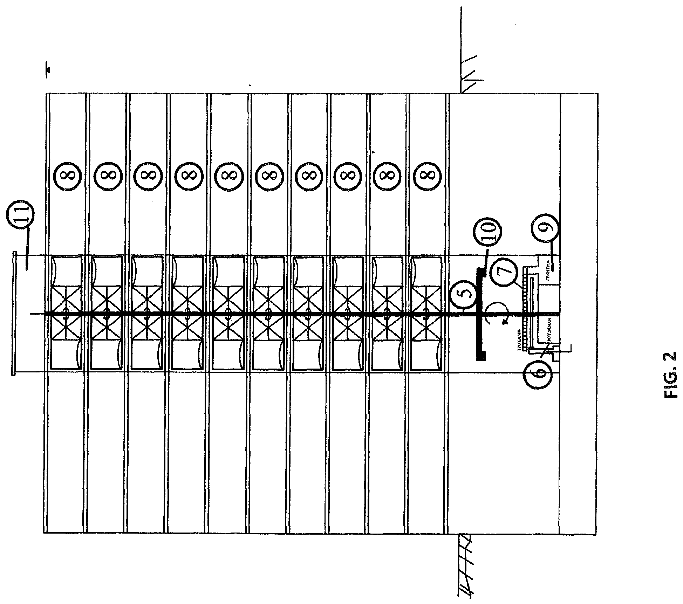

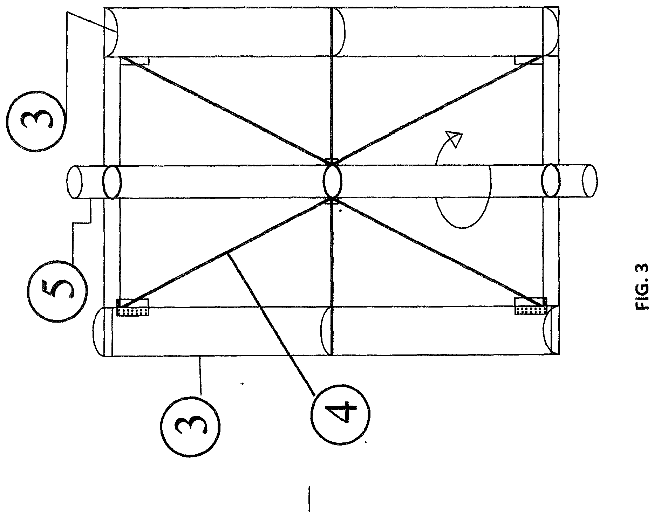

## Claims

1. Multi floor wind turbine having a cylindrical shape and a base consisting of two concentric circles (17, 18), namely an inner concentric circle (17) and an outer (18) concentric circle, whereby between the peripheries of the inner concentric circle (17) and the outer (18) concentric circle oblique channels - walls are provided, that produce a rotational movement to the air, by trapping and guiding it to a blade (3) that rotates with a vertical axis (5) in the inner concentric circle (17), the air entering through a large orifice (13, 14) and exiting through a small orifice (15,16) resulting in the increase of the airspeed, whereby at the base and at the centre of the inner concentric circle (17) the vertical axis (5) rests above a bearing (6) and extends up to an ending (11), the blade (3) having a semi-circular or semi-elliptical shape and being arranged parallel to the vertical axis (5),
**characterized in that** the inner concentric circle (17) on each floor (8), where the blade (3) rotates, is empty, **in that** on each floor (8) the vertical axis (5) is supported by hollow sections with bearings fixed to a slab of each floor (8) horizontally, and **in that** on each floor (8) the blades (3) are fixed on the vertical axis (5) with a network of hollow sections (4).

## Patentansprüche

1. A zylinderförmige Multi-Etage-Windturbine umfassend eine Anordnung, die aus zwei konzentrischen Ringen (17, 18), nämlich einem inneren konzentrischen Ring (17) und einem äußeren konzentrischen Ring (18), besteht,
wobei zwischen den Peripherien des inneren konzentrischen Ringes (17) und des äußeren konzentrischen Ringes (18) schräge Kanalwände angeordnet sind, die durch Fangen und Leiten von Luft zu einem Flügel (3), der in dem inneren konzentrischen Ring (17) um eine vertikale Achse (5) drehbar ist, eine Drehbewegung der Luft anregen können,
wobei Luft durch eine große Öffnung (13, 14) einströmbar und durch eine kleine Öffnung (15, 16) ausströmbar ist, sodass eine Erhöhung von Luftgeschwindigkeit ermöglicht wird,
wobei die vertikale Achse (5) in der Mitte des inneren konzentrischen Ringes (17) der Anordnung auf einem Lager (6) sitzt und sich zu einer Ende (11) erstreckt,
wobei der Flügel (3) halbkreis- oder halbelliptisch-förmig ist und parallel zu der vertikalen Achse (5) angeordnet ist,
**dadurch gekennzeichnet dass** der innere konzentrische Ring (17) auf jeder einzelner Etage (8), wo der Flügel (3) drehbar ist, frei ist, **dass** die vertikale Achse (5) auf jeder einzelner Etage (8) durch Hohlprofilen mit Lagern, die horizontal an einer Platte jeder Etage (8) befestigt sind, abgestützt ist, und **dass** die Flügel (3) auf jeder einzelner Etage (8) durch ein Gerüst von Hohlprofilen (4) an der vertikalen Achse (5) befestigt sind.

## Revendications

1. Éolienne à étages multiples de forme cylindrique et comportant une base constituée de deux cercles concentriques (17, 18), à savoir un cercle concentrique intérieur (17) et un cercle concentrique extérieur (18), dans laquelle entre les périphéries du cercle concentrique intérieur (17) et du cercle concentrique extérieur (18) des canaux-parois obliques sont prévus, lesquels produisent un mouvement de rotation de l'air, en le captant et en le guidant vers une pale (3) qui tourne avec un axe vertical (5) dans le cercle concentrique intérieur (17), et l'air entrant à travers un grand orifice (13, 14) et sortant à travers un petit orifice (15, 16), ce qui entraîne une augmentation de la vitesse de l'air, dans laquelle l'axe vertical (5) repose sur la base et au centre du cercle concentrique intérieur (17) au-dessus d'un palier (6) et s'étend jusqu'à une extrémité (11), la pale (3) présentant une forme semi-circulaire ou une forme semi-elliptique et étant disposée parallèlement à l'axe vertical (5), **caractérisée en ce que** le cercle concentrique intérieur (17) sur chaque plancher (8), dans lequel la pale (3) tourne, est vide, **en ce que** sur chaque plancher (8), l'axe vertical (5) est supporté par des sections creuses, avec des paliers fixés horizontalement à la dalle de chaque plancher (8), et **en ce que** sur chaque plancher (8), les pales (3) sont fixées à l'axe vertical (5) par un réseau de sections creuses (4).
